# EUROPEAN PATENT SPECIFICATION

(11) **EP 2 312 936 B1**
(45) Date of publication and mention of the grant of the patent: **06.09.2017**
(21) Application number: 09788141.1
(22) Date of filing: 10.07.2009
(51) Int. Cl.: A01J 5/017

(54) **DAIRY ANIMAL TREATMENT SYSTEM**
MILCHTIERBEHANDLUNGSSYSTEM
SYSTÈME DE TRAITEMENT POUR ANIMAUX LAITIERS

(30) Priority: 15.07.2008 NL 1035701; 15.07.2008 NL 1035702
(43) Date of publication of application: 27.04.2011
(73) Proprietor: Lely Patent N.V., 3147 PB Maassluis (NL)
(72) Inventor: VAN DEN BERG, Karel, NL-2971 VB Bleskensgraaf (NL); VIJVERBERG, Helena Geralda Maria, NL-3146 BM Maassluis (NL)
(74) Representative: Octrooibureau Van der Lely N.V.
(86) International application number: PCT/NL2009/000149
(87) International publication number: WO 2010/008274

(56) References cited:
- EP-A- 1 555 544
- EP-A- 1 933 168
- WO-A-98/45808
- WO-A-2005/094565
- WO-A-2007/104124
- WO-A-2008/030086
- DE-A1- 19 603 094
- US-A- 5 412 420

## Description

The invention relates to a dairy animal treatment system with a controllable robot arm which is connected to a control device and is configured for moving an animal treatment device to a part of a dairy animal, and with an object recognition device which is connected to the control device and which comprises a light source, a 3D-sensor with a two-dimensional arrangement of optical sensors and a signal processing device for processing signals supplied by the optical sensors.

Such systems are known per se. For example, WO07/104124 discloses a teat position determining system for automated milking systems, with a light source and a camera with a two-dimensional arrangement of image elements which are able to provide time-of-flight information, with the aid of which a depth image can be obtained.

A disadvantage of this known system is that it is problematic to provide a sufficiently large angle of view of the image field, in particular with the milking devices, which should be able to operate in the small space under an animal.

The present invention aims at obviating or reducing, at least partially, the above-mentioned drawback.

This object is achieved by the invention by means of the system according to claim 1. In all of the invention it is understood that the combined image field of the two sensors extends continuously, and that, as a result thereof, there should at least be a partial overlap between the individual image fields. By "positioned at a distance" is meant here that two 3D-sensors are involved which are spatially clearly separate, the distance between them being at least 5 cm. Here, by "in the horizontal plane" is meant the horizontal component of the angle (of view), while by the maximum angle of view is meant the largest of the angles of view of the first and the second image field. Consequently, with these embodiments, there is a relatively small overlap but a large total image field. By means of the system according to the invention it is achieved that there is obtained, in a simple manner, a very large angle of view using a 3D-system, having a continuous angle of view. Such an arrangement is recommended in dairy animal treatment systems in which a distance should be determined in a reliable manner, objects concealing each other rarely being a hindrance. For, an advantage of this embodiment is that, by a simple combination of two 3D-sensors with a small angle of view, it can still cover a large total angle of view. Such 3D-sensors with a small angle of view, such as those with an angle of view between 30° and 40°, and still having a proper sensitivity, can be produced in a much simpler manner than those with a larger angle of view. This is, in one respect, desirable in particular with dairy animal treatment devices, which should operate in the limited space under a dairy animal such as a cow, without disturbing the connection of teat cups or bumping against the legs of the dairy animal. Although it is not impossible per se to provide a proportionally enlarged image field for the 3D-sensor, this will adversely affect its sensitivity. Additionally, there is a possibility of increasing accuracy and reliability, especially in situations in which concealment will not occur, because two images of the same part of the animal will then come available.

It is additionally achieved that the chance of, for example, a teat or other part of an animal being concealed by another teat or other part of the animal, respectively, will be reduced. This means in fact no more than statistically increasing the detection chance by using a plurality of cameras.

It should be noted here that in the case of non-3D-sensors it is necessary to arrange at least two sensors in a triangle in order to be able to determine a distance. And even if, for an other reason, there would be used two or more 3D-sensors, for example in order also to detect concealed teats which, after all, cannot be observed by a sole 3D-sensor, this will by no means result in an obvious clue for the solution, offered in this application, of the angle of view problem. For, in this case, selection of an angle of view is completely irrelevant, because even two 3D-sensors viewing in parallel, but positioned at a distance, would observe such concealed teats. It should also be noted that, for example, EP1555544 makes use of two lasers and rotating mirrors in order to obtain a large angle of view in a compact manner. However, the lasers do not have the drawback of a divergence which is necessary in the case of the light source(s) involved for achieving a 3D-image, while rotating mirrors are not used at all. Consequently, neither the problem mentioned in EP1555544 nor its solution apply to the present invention.

Although WO2008/030086 describes a device in which two 3D-sensors can be used, these sensors have each their own function, in this case the detection of the entire cow, the detection of a detail, such as of the teats, respectively. The problem according to the present invention or a continuous angle of view is not mentioned, and is by no means relevant.

EP 1933168 discloses a milking device having either a sole 3D-sensor with an extremely large angle of view ('fisheye'), or two 3D-sensors 24 and 28 which view in opposite directions. There are no overlapping images, because the light beams which are used by the respective sensors neither overlap. Furthermore, in this document, the problem solved in the present application is neither mentioned nor solved.

WO2007/104124 discloses the use of a 3D-sensor upon determination of teat positions, without any further explanation.

In another embodiment but not according to the present invention, the dairy animal treatment system is characterized in that the object recognition device comprises a second 3D-sensor with a two-dimensional arrangement of optical sensors, which is positioned at a distance from the first 3D-sensor, in particular at a horizontal distance, wherein a first central line of a first image field of the first 3D-sensor and a second central line of a second image field of the second 3D-sensor enclose an angle unequal to 0°, wherein the first and second central lines approach each other, in particular substantially intersect, and the angle is at least equal to a maximum angle of view of the first and the second image field, in particular in the horizontal plane. Here, by "substantially intersect" is meant that the system has been designed in such a manner that the first and second central lines intersect. As this will never exactly be the case in practice, and, consequently, the central lines will cross each other in principle, an envisaged symmetrical design should be understood as satisfying this feature. Incidentally, it is also possible that the central lines are meant to cross each other, which means that they will not approach each other more than at a particular distance. In this manner, at least by central lines which are non-parallel in vertical direction, it is also possible to increase the angle of view in vertical direction. A general advantage of the embodiment mentioned here is that there is indeed a relatively large overlap between the two image fields. Consequently, in this overlap there are in each case made two 3D-images of objects present therein. By comparing the two 3D-images with each other, the reliability of the distance measurement can be improved. In particular for greater distances within the measuring range it is thus possible to obtain an obviously higher reliability.

In particular, a first central line of a first image field of the first 3D-sensor and a second central line of a second image field of the second 3D-sensor enclose an angle unequal to 0°. By means of such an arrangement, an optimum of overlap of the image fields and the total angle of view can be chosen. By "central line" is meant the bisector of the respective image field.

Special embodiments are described below. In particular, the enclosed angle is between 5° and 30° larger than the angle of view of the first and the second image field, in particular in the horizontal plane. It should be noted that this embodiment applies to equal first and second angles of view. With asymmetric embodiments, a corresponding geometric adaptation should be made. In this embodiment, the total angle of view is also between 5° and 30° more than the sum of the angles of view of the first and the second image field, although there is a blind area between the two 3D-sensors which extends until the nearest intersection of the two image fields and from the farthest intersection of the two image fields. Nevertheless, the increase of the total angle of view is a very great advantage of this embodiment. For, there is often a limited measuring range, not only as a data for the image sensor but also as an expected value for the objects to be examined. As an example may be considered a teat detection device in the case of, for example, a cow in a milking robot. The maximum expected distance is then for example 50 to 100 cm, or can at least be limited to such a distance in a simple manner. Moreover, the distance will for example be at least 10 or 20 cm, if only because it is desirable not to touch the teats with the sensors. The measuring range thus runs, for example, from 10-20 cm to 50-100 cm. Such a range can be obtained in a simple manner using relatively standard 3D-sensors with image fields of for example 40°, and with an angle of for example 40-60° enclosed by the central lines.

In particular the distance between the first and the second 3D-sensor and the angle have been chosen in such a manner that the farthest point that falls both in the first and the second image field is located at a distance of at least 2 m, advantageously at least 0.5 m, from the first or the second 3D-sensor. In particular, the distance between the first and the second 3D-sensor amounts to at least 100 mm, and more in particular to between 150 and 250 mm. This embodiment advantageously reflects the above-mentioned conditions. As, both the distance between the 3D-sensors and the angle between the central lines may, in principle, be chosen freely, the most favourable combination that satisfies this feature can be chosen in a simple manner by the person skilled in the art. All this depends, for example, on the dimensions of the robot arm, etc..

In a particular embodiment, at least one of the first and the second 3D-sensor is disposed on the robot arm under a covering of non-translucent material which projects beyond the respective 3D-sensor(s), and in particular projects at least 100 mm beyond the respective 3D-sensor(s). A great advantage of the arrangement according to the invention is that the "actual", large image field in fact only begins at a certain distance from the 3D-sensors. As a result thereof it is possible for the 3D-sensors to be located in a somewhat withdrawn position in the robot arm, in particular under a covering which is able to prevent dirt and the like from falling in. In principle, the covering may project beyond the 3D-sensors to such an extent that the most nearby edge of the image field precisely touches the covering. It should be noted that in this case "under a covering" means that the covering surrounds, preferably on all sides, the sensor and the directly adjacent part of the image field. At the front side the covering will, of course, be open (no chance of image disturbance by scratches or contamination) or transparent (maximum protection against dirt being blown in).

In particular, the first and second central lines are each oriented upwardly with respect to the horizontal, in particular at an angle between 0° and 30° with the horizontal. In many cases such an arrangement is relatively favourable by still further reducing the chance of concealment of objects in the image field. In particular in the case that teats are detected, the chance of concealed teats will thus become very small. In particular in the case that the 3D-sensors have been disposed under a covering, it will be possible to make an optimum use of the arrangement according to the invention, owing to the fact that, despite the upwardly oriented arrangement, the 3D-sensors will still be protected against dirt falling in.

The object recognition device is advantageously configured for determining a distance from an object to one of the 3D-sensors from signals supplied by said 3D-sensor, in particular time-of-flight or phase shifting signals. This embodiment relates in particular to 3D-sensors which operate on the basis of time-of-flight of a reflected light signal, or on the basis of phase shifting of a modulated light signal. Such systems are supposed to be known per se. Owing to the special arrangement according to the invention, the measurement becomes more reliable because the chance of concealed objects in the image is reduced.

A drawback of the known systems mentioned in the preamble is that, despite the spatial image, it is often not well possible to detect, for example, all the teats of the dairy animal, because position information, and in particular distance information, is determined insufficiently accurately, i.e. in only the 3D-mode. An embodiment but not according to the invention aims, in another aspect, at obviating or reducing at least a part of the above-mentioned drawbacks.

This object is achieved by means of a device according to the preamble of claim 1 and comprising a second 3D-sensor, in particular by means of a device according to the invention, and wherein the object recognition device is configured for determining position information, in particular a distance, of an object with respect to one of the 3D-sensors from luminance signals supplied by both 3D-sensors. In particular, the position information comprises, or even is, a position or distance of the teat with respect to the robot arm. Here, "distance with respect to the robot arm" also comprises "distance with respect to a teat sensor device", which, after all, will usually be disposed on the robot arm. The system is found to be able to increase the accuracy of the position information with respect to information obtained by means of only such a 3D-sensor. Of course, it is also possible to determine position information of a plurality of reference points, such as for two or three points, in order exactly to determine a direction or the like. All this will briefly be explained below.

Although 3D-sensors can provide very valuable information, because in principle they are able to take, in one action, an image of an environment with distance information contained therein, and partly as a result thereof to offer also good image processing possibilities, the accuracy of in particular the simpler types often leaves to desire. By now collecting position information of a reference point, it is possible to make the 3D-image information more accurate, for example by calibration. In this manner it is possible, according to techniques known per se, to determine the distance in a very reliable manner by comparing image parts having a corresponding luminance. A teat, for example, will be much brighter than its surroundings. By comparing the two 3D-sensor images the correct image part can be designated in a more reliable manner as the desired object, and the distance from that relevant image part can be determined in a more reliable manner, for example by averaging the two distances found. The object recognition device is advantageously configured for determining the distance by triangulation from luminance signals supplied by both 3D-sensors. In this case, the position, at least the distance of, for example, an object, such as a teat, a teat tip or a fixed point such as an end of the robot arm of a milking robot, is then determined, by triangulation, on the basis of corresponding image parts. What is special to this aspect is that with a depth image sensor which is in fact able to determine itself the associated distances of a whole image field, the distance determination is calibrated by means of another tried and tested technique which, per se, is relatively limited and slow, but which, in this case, does not require separate hardware. For, in this case, already two 3D-sensors are present, so that the triangulation technique can be applied in a simple manner. In particular, the object recognition device is therefore configured for calibrating the distance determination by the 3D-sensors with the aid of the thus determined distance.

It should be noted here that WO2005/094565 describes per se that a distance determination system which uses two cameras and triangulation, can be calibrated by providing an additional distance sensor, here a second pair of cameras. However, this is no more than providing an additional sensor, so that a calibration can be performed purely on the basis of statistics. This embodiment differs therefrom in that the two 3D-sensors which were provided anyway in order to obtain, on the one hand, a large angle of view and, on the other hand, to prevent problems with objects concealing and screening each other, are used in an additional way, besides simply providing two distance values to be averaged, which were determined from the 3D-sensor measurement itself. For, here is applied a third, and fundamentally different distance determination, i.e. triangulation from image information from each of the two, or of course more, 3D-sensors. This means calibration without having to provide an additional sensor for this purpose.

In this embodiment, a measuring signal from the 3D-sensor is used in the triangulation itself. An optical signal recognized as a teat position may, for example, be selected for this purpose. This selection itself may take place on the basis of, whether or not expected, luminance of the signal, because a teat reflects, for example, more light than a dark background, or on the basis of image recognition, etcetera. It is thus possible for the 3D-sensor to determine a position of a teat (or, if desired, another reference point in the image). By means of the second 3D-sensor a second position(signal) can be obtained. By means of the triangulation technique known per se it is then possible, on the basis of a known distance between the two teat sensor devices and angles calculated from the signals, accurately to determine the position, in particular the distance, of the teat or the other reference point. For calibration, this distance, whether or not weighed, can still be compared or averaged by the distances determined by the 3D-sensor. In this embodiment, for determining the distance by triangulation, no use is made of the distance which, by only using the 3D-sensor, can inherently often be determined insufficiently accurately, but of the optical image(signal) which has been properly determined per se. Starting from the idea that the position, the distance, respectively, determined by triangulation is the most accurate one, the corresponding value of position, distance, respectively, as determined by the 3D-sensor can be made more accurate, because, for example, a systematic deviation will now be considerably smaller. The other 3D-sensor information which has been calibrated thereby will then have a deviation which is roughly an order of magnitude smaller. The distances customary in dairy practice of at most 1 metre (order of magnitude) can be determined with an absolute accuracy of some cm by means of the customary 3D-sensors. By triangulation this can be improved to, for example, approximately 1 cm. It is emphasized here that this embodiment can be combined very well with all embodiments of the invention, because the use of the two (or more) 3D-sensors will thus be of still more significance.

The invention will be explained hereinafter in further detail with reference to a few non-limiting exemplary embodiments and the drawing, in which:
Figure 1 schematically shows an arrangement but not according to the invention;
Figure 2a-2d schematically show four embodiments of the system , and
Figure 3 schematically shows a side view of an animal treatment system according to the invention.

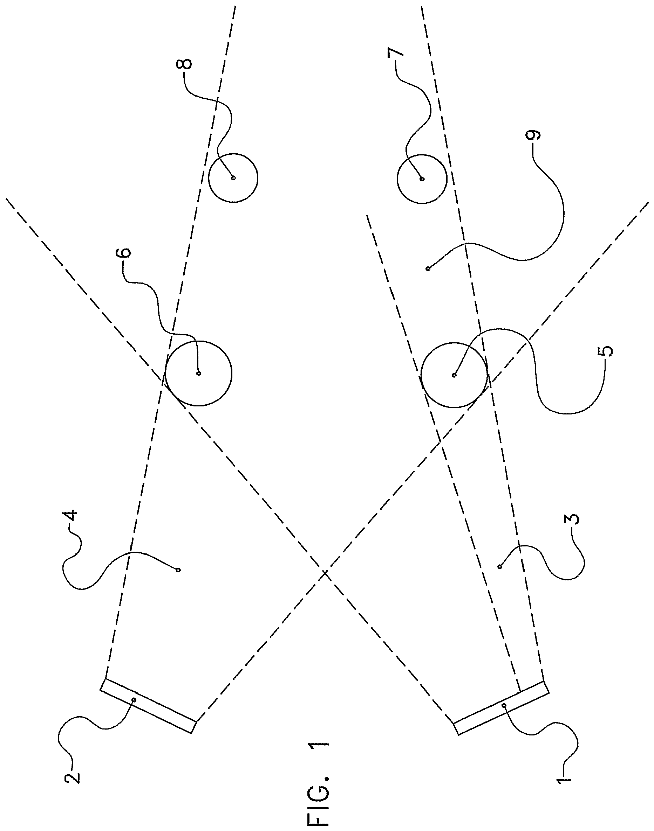

In Figure 1 a first and a second 3D-sensor are denoted by reference numerals 1 and 2, respectively, with a first image field 3 and a second image field 4, respectively. There are further depicted four teats 5, 6, 7, 8, teat 7 being located in the shadow 9 of teat 5.

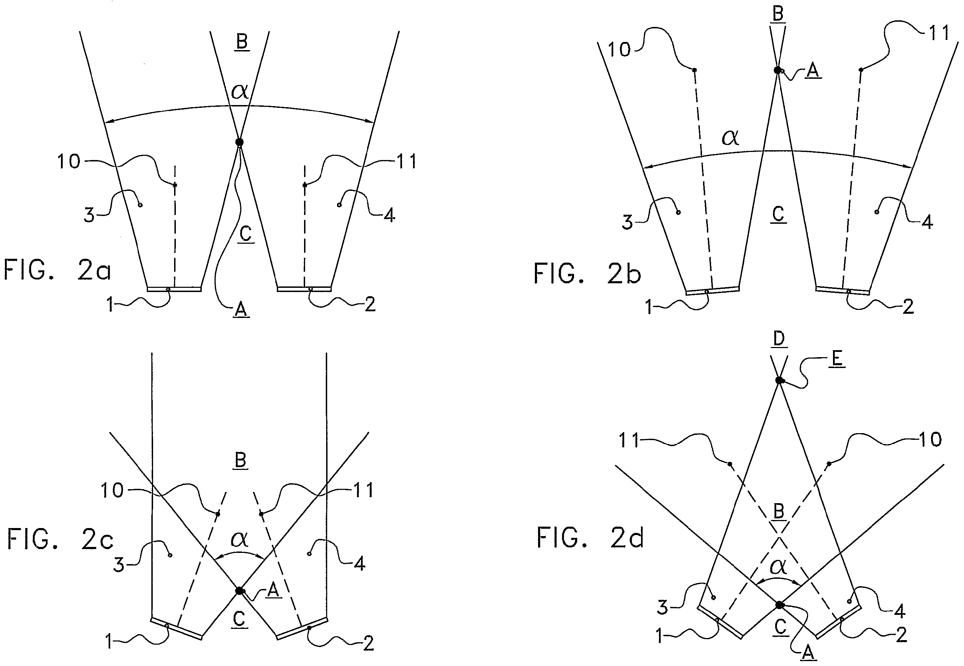

The advantage of the invention with respect to the effects on the angle of view will be explained in further detail in Figures 2a-d. From the embodiment shown here it is also obvious that in the state of the art, which is based on a sole 3D-sensor, an object can be concealed by another object. In the example shown, teat 7 is concealed behind teat 5 in the shadow 9. Although the 3D-sensor can form a spatial image, said sensor is not able to look around a corner, so that the position determination of all objects in the image field is not always possible. Owing to this, the animal treatment system that uses such a 3D-sensor will neither be able always to function.

By now providing a second 3D-sensor 2, at a distance from the first 3D-sensor 1, it will be possible to obviate the drawback of concealment for the greater part. It is apparent from Figure 1 that the teat 7 is not located in the shadow of the teat 5 with respect to the second image field 4. As a result thereof, in this case, the second 3D-sensor 2 will be able to form an image in which the teat 7 is clearly visible. On the basis of this information it is indeed possible for the animal treatment system to function properly. The chance that an object is concealed in both image fields 3 and 4 is very small, and obviously less than half the chance of concealment in the case of a sole image field.

It is further pointed out that the use of two 3D-sensors may also be advantageous even if an object, such as the teat 5, is visible to both sensors 1 and 2. Not only the distance determination, and also the position determination, will be more accurate by, for example, averaging errors. It is also possible to apply another position or distance determination, namely triangulation on the basis of luminance comparisons of corresponding components in the two images. By means of image recognition the teat 5 in the image of the 3D-sensor 1 and the 3D-sensor 2 can be recognized, so that the direction of the teat 5 with respect to the two 3D-sensors 1 and 2 can be determined. As the distance between the sensors 1 and 2 is known, an additional distance measurement can be performed by triangulation. By thus comparing the values for the distance determined by means of the 3D-sensor 1, the 3D-sensor 2 and the triangulation by means of both sensors, a very accurate position and/or distance determination can be performed. The distance measurement of each of the 3D-sensors 1 and 2, which each have an absolute accuracy of some cm at a distance of 1 metre, using 3D-sensors customary in practice, can thus become accurate to approximately 1 cm.. It should be noted that the *relative* accuracy of 3D-sensors themselves is better.

The 3D-sensors 1 and 2 themselves can function according to any known depth-image sensor principle. Examples thereof are a time-of-flight sensor for light or an ultrasonic sensor for sound. In the case of optical sensors, these comprise a light source which emits pulsed and/or modulated light (visible and/or infrared). This source is not shown. There may be provided a source for each sensor, or, for example, in total one source for both sensors.

Figures 2a-2d show four embodiments of an arrangement of two 3D-sensors. In Figure 2a the sensors 1 and 2 are arranged in such a manner that the respective central lines 10 and 11 of their image fields 3 and 4 extend substantially parallel. The first intersection A where the image fields meet, the blind area C and the overlap area B are also depicted. By α is denoted the total opening angle of the combined image fields 3 and 4.

This embodiment shows that the total opening angle α exactly corresponds to the opening angle of each of the sensors 1 and 2. Although the advantage with respect to reducing the chance of concealment is also provided here, the additional advantage of adjustment of the total opening angle is only given in the pure addition of the individual opening angles. On the other hand, the overlap area B is very large. Therefore, such an arrangement is very suitable for those treatment systems that operate with relatively great possible distances.

Figure 2b shows an arrangement according to the invention in which the central lines 10 and 11 diverge. Here, like in the remaining part of the drawing, corresponding components are denoted by the same reference numerals.

It is clearly visible that the opening angle α increases, while the overlap area B strongly decreases. This arrangement is very suitable for obtaining a rather large opening angle using simple means, such as standard 3D-sensors 1 and 2. A drawback may be that the total overlap area B is small, and consequently also the improvement of the chance of obviating concealment of objects. Although the total opening angle α increases to a lesser extent than would be possible if the sensors would have precisely contiguous angles of view, an advantage of the invention, i.e. an increasing instead of a decreasing total angle of view when using two 3D-sensors, which additionally show concealed objects, is indeed achieved.

Figure 2c shows an arrangement in which the central lines 10 and 11 extend in such a manner that a substantially strip-shaped overlap area B is created. This may be achieved by having the central lines 10 and 11 make an angle which is (almost) equal to the opening angle of the image field 3,4. This arrangement has a large total opening angle α which is equal to twice the opening angle of the individual 3D-sensor 1, 2. Additionally, there is a large overlap area B which, in principle, extends infinitely. As a result thereof, this arrangement is extremely suitable for measurements and systems in which the distance can strongly vary, but the to be covered image field is strongly limited in one dimension, the width. This applies, for example, to teat detection in a milking box, in which case the sideward play for the animals is limited.

Figure 2d, finally, shows an arrangement in which the central lines 10 and 11 make a large angle with each other, so that the total angle of view α becomes very large. It should be noted that the total angle of view α is larger than the sum of the individual angles of the image fields, in this case approximately 100° compared with each time approximately 30°. An advantage of such an arrangement is a very large total image field, a very small blind area C, while the overlap area B is still large. Such an arrangement is very suitable if the maximum distance of objects is limited, which is often already a given determined by the sensitivity of the 3D-sensors, and if the distance from objects to the sensors 1, 2 can become small too and consequently only a small blind area C is allowed. This arrangement is in particular suitable for a teat detection device and animal treatment systems making use thereof, such as in particular a milking robot or a robot which is configured for teat treatment, in particular cleaning, disinfection, pre-treatment. In this case, the distances are often limited to between approximately 5-10 cm and 50-100 cm.

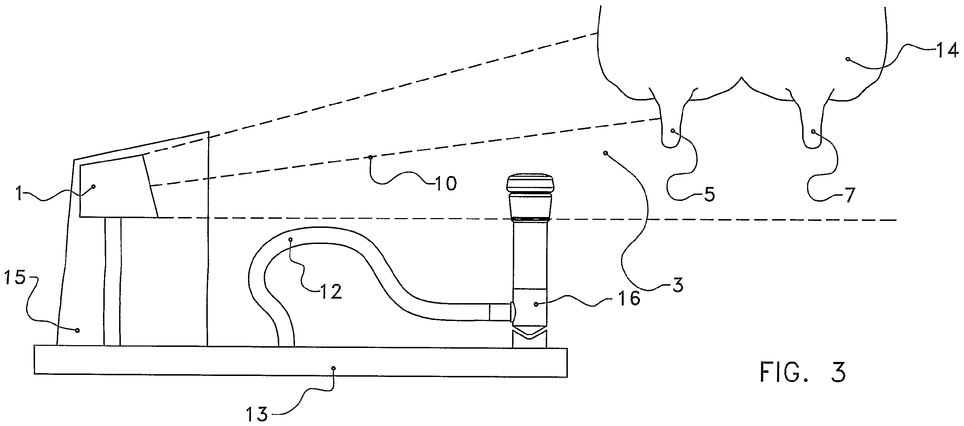

Figure 3 schematically shows a side view of an animal treatment system according to the invention. Here, in addition to the first 3D-sensor 1 with image field 3 and teats 5 and 7 of an udder 14 present therein, are shown a milk hose 12 and a teat cup 16 on a robot arm 13. By 15 a covering is denoted.

It is also visible that the central line 10 of the image field 3 makes an angle with the horizontal. Because, as a result thereof, the image field is substantially oriented obliquely upwards, in particular teats, such as teats 5 and 7, which are often roughly located at the same height, will conceal each other less often.

It should be noted that the upper side of the teat cup 16 is located in the image field 3, so that upon positioning thereof with respect to a teat 5, 7, the distance therebetween can be minimized in one and the same image of the 3D-sensor 1.

Moreover, it is pointed out that only part of the 3D-sensors, the teat cups and the teats is shown. Incidentally, it is possible that only a sole teat cup 16 is provided at a time. In particular, the animal treatment device also comprises a robot arm with a gripper which positions the teat cups individually. Additionally, a cleaning brush or the like may also be provided instead of one or more teat cups 16. It is further pointed out that it is advantageous to position the 3D-sensor 1 in such a manner that the milk hose 12 is hardly or not visible, because the latter does hardly or not contribute to the positioning of the teat cup 16 with respect to the teat 5,7.

The covering 15 is provided to protect the 3D-sensor 1 from dirt and the like, and to protect it from impeding ambient light or the like. For this purpose, the covering 15 is (preferably) made of non-translucent material. Of course, viewed in the direction of the image field 3, the covering is open or translucent. It is clearly visible that the covering 15 projects beyond the 3D-sensor 1. As a result thereof the latter is very well protected from dirt falling in from above. Such a recessed arrangement is possible because of the fact that the large image field is actually only created from a point beyond the 3D-sensors. In Figures 2c and 2d it is more clearly visible that the large image field is created from point A which is located at a distance in front of the sensors 1 and 2.

The illustrated embodiments are by no means intended to be limiting. The scope of protection of the invention is determined by the appended claims.

## Claims

1. Dairy animal treatment system with a controllable robot arm (13) which is connected to a control device and is configured for moving an animal treatment device (16) to a part of a dairy animal, and with an object recognition device which is connected to the control device and which comprises a controllable light source, a first 3D-sensor (1) with a two-dimensional arrangement of optical sensors and a signal processing device for processing signals supplied by the optical sensors, **characterized in that** the object recognition device comprises a second 3D-sensor (2) with a two-dimensional arrangement of optical sensors, which is positioned at a distance from the first 3D-sensor, in particular at a horizontal distance, wherein a first central line (10) of a first image field (3) of the first 3D-sensor and a second central line (11) of a second image field (4) of the second 3D-sensor enclose an angle unequal to 0°, wherein the first and second central lines diverge, and enclose an angle which is smaller than a maximum angle of view of the first and the second image field, in particular in the horizontal plane, wherein the first and second central lines are each oriented upwardly with respect to the horizontal, in particular at an angle between 0° and 30° with the horizontal, horizontal, wherein at least one of the first and the second 3D-sensor is disposed on the robot arm under a covering (15) of non-translucent material which projects beyond the respective 3D-sensor(s), in particular projects at least 100 mm beyond the respective 3D-sensors.

2. Dairy animal treatment system according to claim 1, wherein the object recognition device is configured for determining a distance from an object to one of the 3D-sensors from signals supplied by said 3D-sensor, in particular time-of-flight or phase shifting signals.

3. Dairy animal treatment system according to one of the preceding claims, wherein the object recognition device is configured for determining a distance from an object to one of the 3D-sensors from luminance signals supplied by both 3D-sensors.

## Patentansprüche

1. Milchtierbehandlungssystem mit einem steuerbaren Roboterarm (13), der mit einer Steuereinrichtung verbunden ist und konfiguriert ist zum Bewegen einer Tierbehandlungseinrichtung (16) zu einem Teil eines Milchtiers und mit einer Objekterkennungseinrichtung, die mit der Steuereinrichtung verbunden ist und die eine steuerbare Lichtquelle, einen ersten 3D-Sensor (1) mit einer zweidimensionalen Anordnung von optischen Sensoren und eine Signalverarbeitungseinrichtung zum Verarbeiten von durch die optischen Sensoren gelieferten Signalen umfasst,
**dadurch gekennzeichnet, dass** die Objekterkennungseinrichtung einen zweiten 3D-Sensor (2) mit einer zweidimensionalen Anordnung von optischen Sensoren umfasst, die in einem Abstand von dem ersten 3D-Sensor, insbesondere in einer horizontalen Distanz, positioniert ist, wobei eine erste Mittellinie (10) eines ersten Bildfelds (3) des ersten 3D-Sensors und eine zweite Mittellinie (11) eines zweiten Bildfelds (4) des zweiten 3D-Sensors einen Winkel ungleich 0° einschließen, wobei die erste und zweite Mittellinie divergieren und einen Winkel einschließen, der kleiner ist als ein größter Blickwinkel des ersten und zweiten Bildfelds, insbesondere in der horizontalen Ebene, wobei die erste und zweite Mittellinie jeweils nach oben bezüglich der Horizontalen orientiert sind, insbesondere unter einem Winkel zwischen 0° und 30° mit der Horizontalen,
wobei mindestens einer des ersten und des zweiten 3D-Sensors an dem Roboterarm unter einer Abdeckung (15) aus einem nicht-durchscheinenden Material angeordnet ist, das über den bzw. die jeweiligen 3D-Sensoren vorsteht, insbesondere um mindestens 100 mm über die jeweiligen 3D-Sensoren vorsteht.

2. Milchtierbehandlungssystem nach Anspruch 1, wobei die Objekterkennungseinrichtung konfiguriert ist zum Bestimmen einer Distanz von einem Objekt zu einem der 3D-Sensoren aus durch den 3D-Sensor gelieferten Signalen, insbesondere Flugzeit- oder Phasenverschiebungssignalen.

3. Milchtierbehandlungssystem nach einem der vorhergehenden Ansprüche, wobei die Objekterkennungseinrichtung konfiguriert ist zum Bestimmen einer Distanz von einem Objekt zu einem der 3D-Sensoren aus durch beide 3D-Sensoren gelieferten Luminanzsignalen.

## Revendications

1. Système de traitement d'animal laitier avec un bras robotisé contrôlable (13) qui est relié à un dispositif de contrôle et est configuré pour déplacer un dispositif de traitement d'animal (16) jusqu'à une partie d'un animal laitier, et avec un dispositif de reconnaissance d'objets qui est relié au dispositif de contrôle et qui comprend une source de lumière contrôlable, un premier capteur 3D (1) avec un agencement bidimensionnel de capteurs optiques et un dispositif de traitement du signal pour traiter les signaux délivrés par les capteurs optiques,
**caractérisé en ce que** le dispositif de reconnaissance d'objets comprend un deuxième capteur 3D (2) avec un agencement bidimensionnel de capteurs optiques, qui est positionné à une distance du premier capteur 3D, en particulier à une distance horizontale,
dans lequel un premier axe (10) d'un premier champ image (3) du premier capteur 3D et un deuxième axe (11) d'un deuxième champ image (4) du deuxième capteur 3D délimitent un angle différent de 0°, dans lequel les premier et deuxième axes divergent, et délimitent un angle qui est inférieur à un angle de vue maximal du premier et du deuxième champ image, en particulier dans le plan horizontal,
dans lequel les premier et deuxième axes sont chacun orientés vers le haut par rapport à l'horizontale, en particulier à un angle entre 0° et 30° avec l'horizontale,
dans lequel au moins un des premier et deuxième capteurs 3D est disposé sur le bras robotisé sous un revêtement (15) de matériau non translucide qui dépasse du ou des capteurs 3D respectifs, en particulier dépasse d'au moins 100 mm des capteurs 3D respectifs.

2. Système de traitement d'animal laitier selon la revendication 1, dans lequel le dispositif de reconnaissance d'objets est configuré pour déterminer une distance depuis un objet jusqu'à un des capteurs 3D à partir de signaux délivrés par ledit capteur 3D, en particulier de signaux de temps de vol ou de déphasage.

3. Système de traitement d'animal laitier selon une des revendications précédentes, dans lequel le dispositif de reconnaissance d'objets est configuré pour déterminer une distance depuis un objet jusqu'à un des capteurs 3D à partir de signaux de luminance délivrée par les deux capteurs 3D.
